# EUROPÄISCHE PATENTANMELDUNG

(11) **EP 0 828 279 A1**
(43) Veröffentlichungstag der Anmeldung: **11.03.1998**
(21) Anmeldenummer: 96112823.8
(22) Anmeldetag: 08.08.1996
(51) Int. Cl.: H01H 85/30

(54) **Sicherungseinsatz mit Anzeigevorrichtung, insbesondere Mittenanzeiger**

(71) Anmelder: SIEMENS AKTIENGESELLSCHAFT, 80333 München (DE)
(72) Erfinder: Becker, Friedrich, Dipl.-Ing. (FH), 93164 Brunn (DE); Biller, Walter, Dipl.-Ing. (FH), 93096 Köfering (DE); Birkl, Ludwig, Dipl.-Ing. (FH), 93309 Kelheim (DE); Deser, Ulrich, Dipl.-Ing. (FH), 94369 Rain (DE); Fink, Gerd, Dipl.-Ing. (FH), 93073 Neutraubling (DE); Graf, Joachim, Ing. grad., 93073 Neutraubling (DE); Hölzl, Max, 93049 Regensburg (DE); Pilsl, Wolfgang, Dipl.-Ing. (FH), 93107 Thalmassing (DE); Schmidt, Ralf, Dipl.-Ing. (FH), 91056 Erlangen (DE); Zempelin, Jens, Dipl.-Ing. (FH), 93161 Sinzing (DE)

(57) **Zusammenfassung**

Die Erfindung bezieht sich auf einen Sicherungseinsatz, insbesondere für Niederspannungs-Hochleistungs-Sicherungen, NH-Sicherungen, dessen Arbeitsschmelzleiter (1) durch ein elektrisch hierzu parallel angeordneten Anzeigeschmelzleiter (2) mit Anzeiger (4) überwacht ist. Es ist vorgesehen, daß der Anzeiger (4) mit einem Formgedächtnis-Element (3) verbunden ist und beweglich derart ausgeführt ist, daß bei Formänderung des Formgedächtnis-Elementes der Anzeiger (4) eine Bewegung ausführt, die als Anzeige verwertet ist.

## Beschreibung

Die Erfindung bezieht sich auf einen Sicherungseinsatz, insbesondere für Niederspannungs-Hochleistungs-Sicherungen, NH-Sicherungen, dessen Arbeitsschmelzleiter durch einen elektrisch hierzu parallel angeordneten Anzeigeschmelzleiter mit Anzeiger überwacht ist.

Es sind Anzeigevorrichtungen als Mittenanzeiger auf dem Markt, die mit einer Anzeigeperle aus Glas bzw. Kunststoff arbeiten. Die Anzeigeperle ist durch den Anzeigeschmelzleiter in einer Ausnehmung im Körper des Sicherungseinsatzes fixiert, wobei der Anzeigeschmelzleiter durch Bohrungen gefädelt ist und an Abschlußplatten oder an den Kontaktmessern kontaktgebend verbunden ist. Wenn der Anzeigeschmelzleiter durchschmilzt, wird die Anzeigeperle aus der Ausnehmung des Sicherungskörpers herausgeschleudert, wodurch das Ansprechen des Sicherungseinsatzes angezeigt wird. Die herausfallende Anzeigeperle und ggf. zusätzliche Federelemente, um die Anzeigefunktion sicherzustellen, können in Anlagen fallen und Funktionsstörungen oder Verunreinigungen bewirken.

Der Erfindung liegt die Aufgabe zugrunde, einen Sicherungseinsatz zu entwickeln, der bei deutlicher Anzeige ohne abfallende Teile arbeitet.

Die Lösung der geschilderten Aufgabe erfolgt nach der Erfindung durch einen Sicherungseinsatz nach Anspruch 1. Der Anzeiger ist mit einem Formgedächtnis-Element verbunden und beweglich derart ausgeführt, daß bei Formänderung des Formgedächtnis-Elementes der Anzeiger eine Bewegung ausführt. Der Anzeiger kann an einer gut sichtbaren Stelle ausgeführt sein, insbesondere als Mittenanzeiger. Wenn der Anzeigeschmelzleiter anspricht und anzeigt, daß der Arbeitsschmelzleiter durchgeschmolzen ist und die Sicherung abgeschaltet hat, führt der Anzeiger eine signifikante Bewegung aus, bzw. er führt durch Bewegung einen Zustand herbei, der sich optisch auffällig vom Ruhezustand unterscheidet.

Das Formgedächtnis-Element kann vorteilhaft danach ausgewählt sein, daß seine Aktivierungstemperatur deutlich unterhalb seiner Schmelztemperatur liegt.

Der Anzeiger kann nach einer Weiterbildung als Drehteller ausgeführt sein, der koaxial mit dem Formgedächtnis-Element umwickelt ist, wobei der Drehteller an seiner Sichtseite partiell abgedeckt ist und die nichtabgedeckten und die abgedeckten Bereiche des Drehtellers sich auffällig unterscheiden. Ein derartiger Drehteller kann in seiner äußeren Gestaltung nach Art eines Flügelanzeigers aufgebaut sein, wie er von Telefonapparaten her bekannt ist.

Nach einer anderen Weiterbildung ist der Anzeiger als hochklappbarer Teller ausgeführt, der durch das Formgedächtnis-Element angetrieben ist.

Nach einer weiteren Weiterbildung ist der Anzeiger als Teller auf einem schraubenfederartig ausgebildeten Formgedächtnis-Element ausgeführt. Beim Ansprechen des Formgedächtnis-Elementes wird die Schraubenfeder ausgespreizt, so daß der Teller auf einen Abstand zum Gehäuse des Sicherungseinsatzes gehoben wird.

Das Formgedächtnis-Element kann jeweils mit dem Anzeigeschmelzleiter verbunden sein. Das Formgedächtnis-Element kann andererseits jeweils als Anzeigeschmelzleiter ausgeführt sein und mit einer Sollschmelzstelle versehen sein.

Der Anzeiger läßt sich in allen Ausführungsarten leicht mittig am Gehäuse des Sicherungseinsatzes als Mittenanzeiger ausführen.

Die Erfindung soll nun anhand von in der Zeichnung grob schematisch wiedergegebenen Ausführungsbeispielen näher erläutert werden:
In FIG 1 ist ein Schmelzeinsatz im Längsschnitt mit einem Drehteller als Anzeiger, einem sogenannten Flügelanzeiger, veranschaulicht.
In FIG 2 ist der Anzeiger nach FIG 1 bei abgebrochener Darstellung vergrößert wiedergegeben.
In FIG 3 ist der Sicherungseinsatz in Aufsicht auf den Anzeiger dargestellt.
In FIG 4 ist ein Sicherungseinsatz mit einem Klappanzeiger, also einem hochklappbaren Teller, im übrigen in der Darstellungsweise nach FIG 2, veranschaulicht.
In FIG 5 ist der Klappanzeiger nach FIG 4 nach Hochklappen des die Anzeigefunktion übernehmenden Tellers wiedergegeben.
In FIG 6 ist die Aufsicht auf den Anzeiger nach FIG 4 schematisch dargestellt.
In FIG 7 ist die Aufsicht auf den Anzeiger nach FIG 5 bei gleicher Sicht wie bei FIG 6 schematisch dargestellt.
In FIG 8 ist Sicherungseinsatz mit einem Anzeiger als Teller auf einem schraubenfederartig ausgebildeten Formgedächtnis-Element in Schnittansicht veranschaulicht.

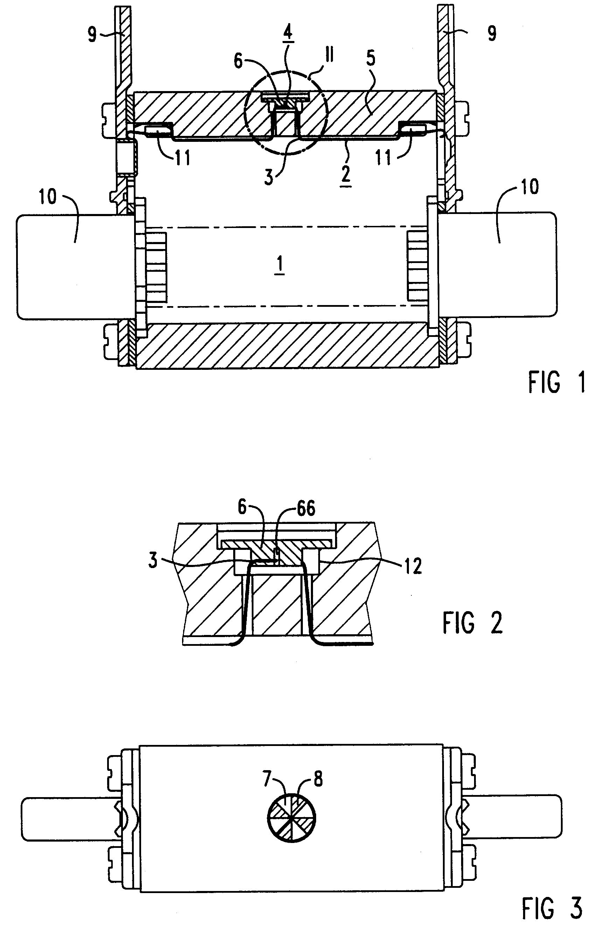

Der Sicherungseinsatz nach FIG 1 ist als NH-Sicherung ausgeführt und im Längsschnitt dargestellt. Der Sicherungseinsatz weist einen Arbeitsschmelzleiter 1 und einen hierzu elektrisch parallel geschalteten Anzeigeschmelzleiter 2 auf, der mit einem Formgedächtnis-Element 3, eines Anzeigers 4 verbunden sein kann oder der insgesamt als Formgedächtnis-Element 3 ausgeführt sein kann. Im zweiten Fall ist das Formgedächtnis-Element danach auszuwählen, daß seine Aktivierungstemperatur unterhalb seiner Schmelztemperatur liegt. Der Anzeiger 4 ist als Drehteller im Körper des Sicherungseinsatzes drehbeweglich angeordnet. Der Drehteller 6 nimmt im Ausführungsbeispiel in einem Schlitz 7 nach FIG 2 ein Formgedächtnis-Element 3 auf, das um den Drehteller koaxial herumgeführt ist und das bei seiner Aktivierung den drehbeweglich gelagerten Drehteller 6 verdreht.

Der Drehteller 6 ist an seiner Sichtseite nach FIG 3 durch feststehende Sektorelemente 7 an seiner Sichtseite partiell abgedeckt, wobei die nichtabgedeckten und die abgedeckten Bereiche des Drehtellers 6 sich auffällig unterscheiden. Dadurch kommt beim Aktivieren des Formgedächtnis-Element ein zuvor abgedeckter Bereich des Drehtellers als "Flügel" 8 zum Vorschein.

Der Anzeigeschmelzleiter 2 ist im Ausführungsbeispiel über Abschlußplatten 9 oder über elektrisch leitende Schichten bei isolierenden Abschlußplatten mit Kontaktmessern 10 und dem Arbeitsschmelzleiter 1 elektrisch parallel verbunden.

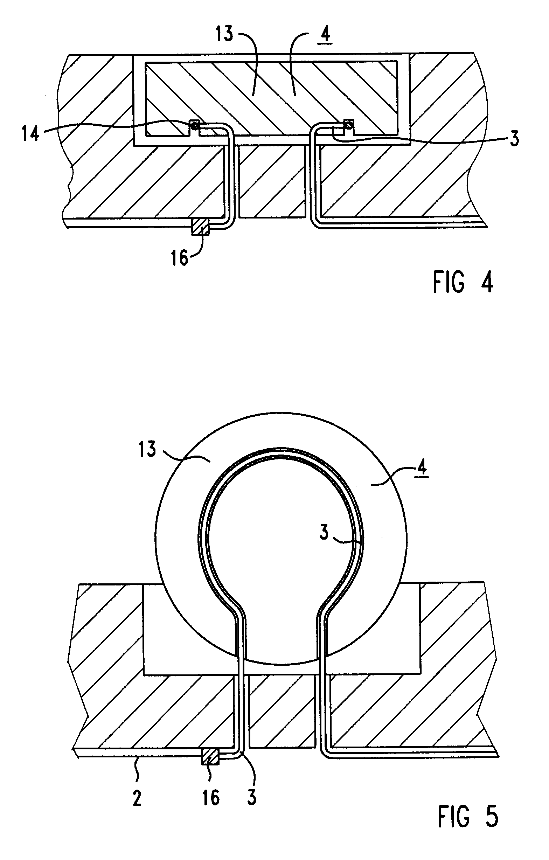

Das Formgedächtnis-Element 3 wird als Antriebs- bzw. Stellelement für eine Anzeigebewegung eingesetzt. Das Formgedächtnis-Element 3 beim Sicherungseinsatz nach FIG 1 ergibt eine Drehbewegung. Es kann auch für eine Klappbewegung oder eine Schiebebewegung eingesetzt werden. Im Ausführungsbeispiel nach den FIG 4 bis 7 wird eine Klappbewegung realisiert. Bei allen Ausführungen kommt man ohne zusätzliche Federelemente bzw. besondere Antriebselemente aus. In Verbindung mit der hohen mechanischen Festigkeit einer drahtförmigen Formgedächtnis-Legierung als Formgedächtnis-Element ermöglicht das im Vergleich zu den Legierungen für konventionelle Anzeigeschmelzleiter wegen der Robustheit auf dem Markt befindlicher Formgedächtnis-Elemente eine hochmechanisierte Fertigung. Hierbei ist es vorteilhaft, wenn der Anzeigeschmelzleiter 2 insgesamt als Formgedächtnis-Element ausgeführt ist und über Klemmittel 11 nach FIG 1 mit elektrisch leitenden Abschlußplatten oder aus Sicherheitsgründen mit elektrisch leitenden Schichten an Abschlußplatte 9 aus Isolierstoff angeklemmt wird.

Wenn das Formgedächtnis-Element 3 als Anzeigeschmelzleiter 2 ausgeführt ist, lassen sich Kombinationen von üblichen Stirnanzeigern und von Mittenanzeigern realisieren.

Das Formgedächtnis-Element kann vor Einbringen in eine Aufnahme des Anzeigers 4, beispielsweise in einem Schlitz 66 eines Drehtellers 6, entsprechend der gewünschten Anzeigebewegung verformt werden und mit einem Anzeigekörper, z.B. Drehteller 6, formschlüssig verbunden werden. Nach Durchschmelzen des Arbeitsschmelzleiters 1 wird das Formgedächtnis-Element 3 durch den erhöhten Stromfluß erwärmt, was innerhalb eines Sekundenbruchteils zu einer vorbestimmten Bewegung des Anzeigers führt.

Wenn das Formgedächtnis-Element hinsichtlich seines Materials derart ausgewählt ist, daß das Formgedächtnis-Element deutlich unterhalb seiner Schmelztemperatur bei Einsatz im Sicherungseinsatz aktiviert wird, ist die Anzeigebewegung auch bei anschließendem Durchschmelzen des Formgedächtnis-Elementes sichergestellt. Beim Durchschmelzen des Formgedächtnis-Elementes wird die Funktion eines üblichen Anzeigeschmelzleiters gewährleistet. Das Durchschmelzen kann an einer definierten Stelle erfolgen, wenn eine Verjüngung bzw. Verkerbung des Formgedächtnis-Elementes in geeigneter Weise vorgenommen wird. Es ist vorteilhaft, eine derartige Verjüngung bzw. Verkerbung nahe an den Kontaktstellen zu den Abschlußplatten 9 oder bei unmittelbarer Verbindung mit den Kontaktmessern 10 nahe vor den Kontaktmessern 10 auszuführen. Dadurch erzielt man den weiteren Vorteil, daß die sonst bei Mittenanzeigern bekannte Problematik des Anzeigerversagens aufgrund des sonst üblichen konstruktiven Aufbaus hier vermieden wird.

In der Ausführung als Mittenanzeiger nach FIG 1 bzw. nach FIG 2 ist der Drehteller 6 in einer Ausnehmung 12 im Körper des Sicherungseinsatzes drehbeweglich eingelegt, wobei der Schlitz 66 bei der Montage auf das drahtförmige Formgedächtnis-Element 3 aufrasten kann, so daß das Formgedächtnis-Element vom Schlitz 66 aufgenommen wird und der Drehteller 6 durch das Formgedächtnis-Element zugleich gehalten wird.

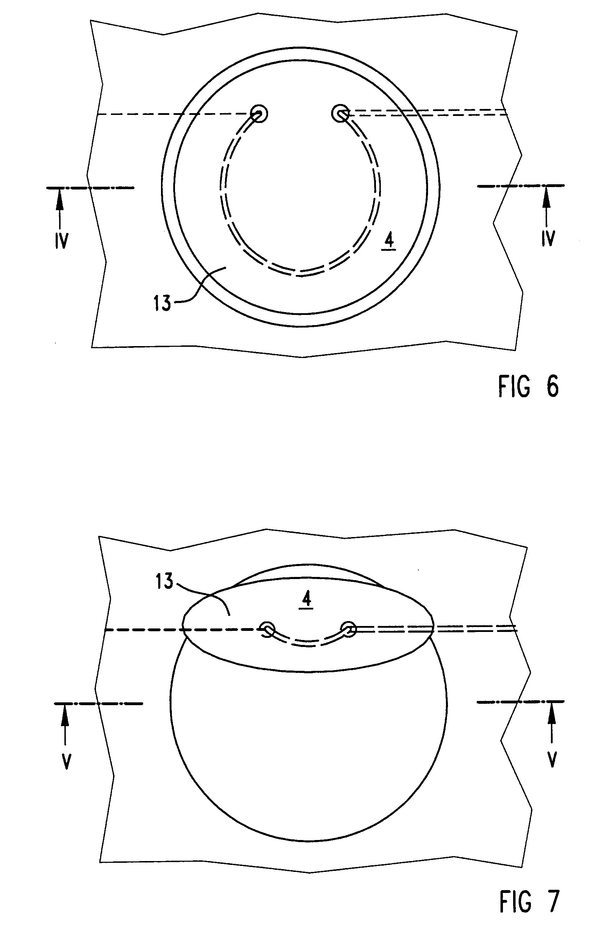

In der Ausführung nach den FIG 4 bis 7 ist der Anzeiger 4 als hochklappbarer Teller ausgeführt, der durch das Formgedächtnis-Element 3 bei seiner Aktivierung aus der Stellung nach FIG 4 bzw.6 in die Stellung nach FIG 5 bzw.7 überführt wird. Bei der Aktivierung des Formgedächtnis-Elementes 3 wird der von diesem getragene Klappteller 13 hochgeklappt. Das Formgedächtnis-Element 3 kann hierzu in einer Ringnut 14 im Klappteller 13 eingelegt sein. Ein derartiger Klappanzeiger läßt sich durch Aufdrücken eines Tellers auf dem Formgedächtnis-Element 3 leicht fertigen. Der gewonnene Klappteller 13 wird im Ausführungsbeispiel nach FIG 4 allein durch das Formgedächtnis-Element 3 kippbeweglich gelagert. Verständlicherweise können noch zusätzliche Lagerstellen vorgesehen sein.

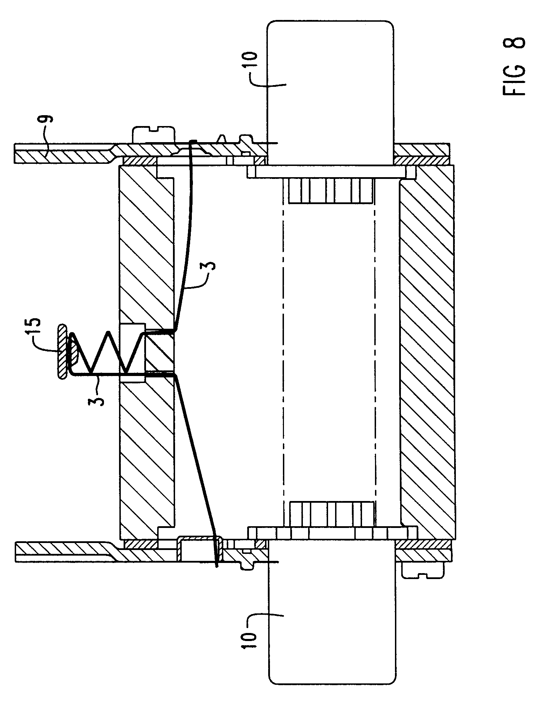

Beim Ausführungsbeispiel nach FIG 8 wird eine Schiebebewegung des Formgedächtnis-Elementes 3 realisiert. Hierzu ist der Anzeiger als Hebeteller 15 auf einem federartig, im Ausführungsbeispiel schraubenfederartig ausgebildeten Formgedächtnis-Element 3 ausgeführt. Bei der Aktivierungstemperatur des Formgedächtnis-Elementes 3 entspannt sich die Schraubenfeder. Infolge des Formgedächtnis-Effektes wird hierbei die Formgebung rückgängig gemacht, so daß der Hebeteller 15 bzw. ein Plättchen aus dem Körper hochgehoben wird, wenn die Sicherung abschaltet. Im Ausführungsbeispiel nach FIG 8 ist das Formgedächtnis-Element 3 als Anzeigeschmelzleiter ausgeführt und an der Stirnseite der Abschlußplatten 9 mit den Kontaktmessern 10 elektrisch unmittelbar oder durch ein Verbindungsstück elektrisch verbunden.

Im Ausführungsbeispiel nach den FIG 4 und 5 ist das Formgedächtnis-Element 3 mit einem Anzeigeschmelzleiter 2 an einer Kontaktstelle 16 elektrisch und mechanisch verbunden.

## Patentansprüche

1. Sicherungseinsatz, insbesondere für Niederspannungs-Hochleistungs-Sicherungen, NH-Sicherungen, dessen Arbeitsschmelzleiter (1) durch einen elektrisch hierzu parallel angeordneten Anzeigeschmelzleiter (2) mit Anzeiger (4) überwacht ist,
**dadurch gekennzeichnet**,
daß der Anzeiger (4) mit einem Formgedächtnis-Element (3) verbunden ist und beweglich derart ausgeführt ist, daß bei Formänderung des Formgedächtnis-Elementes der Anzeiger (4) eine Bewegung ausführt, die als Anzeige verwertet ist.

2. Sicherungseinsatz nach Anspruch 1,
**dadurch gekennzeichnet**,
daß das Formgedächtnis-Element (3) danach ausgewählt ist, daß seine Aktivierungstemperatur unterhalb seiner Schmelztemperatur liegt.

3. Sicherungseinsatz nach Anspruch 1 oder 2,
**dadurch gekennzeichnet**,
daß der Anzeiger (4) als Drehteller (6) ausgeführt ist, der koaxial mit dem Formgedächtnis-Element umwickelt ist, wobei der Drehteller (6) an seiner Sichtseite partiell abgedeckt ist und die bei Aktivierung des Formgedächtnis-Elementes nichtabgedeckten Bereiche als "Flügel" (8) und die abgedeckten Bereiche des Drehtellers sich auffällig unterscheiden.

4. Sicherungseinsatz nach Anspruch 1 oder 2,
**dadurch gekennzeichnet**,
daß der Anzeiger (4) als hochklappbarer Klappteller (13) ausgeführt ist, der durch das Formgedächtnis-Element (3) angetrieben ist.

5. Sicherungseinsatz nach Anspruch 1 oder 2,
**dadurch gekennzeichnet**,
daß der Anzeiger (4) als Hebeteller (15) auf einem schraubenfederartig ausgebildeten Formgedächtnis-Element (3) ausgeführt ist.

6. Sicherungseinsatz nach einem der Ansprüche 1 bis 5,
**dadurch gekennzeichnet**,
daß das Formgedächtnis-Element (3) mit dem Anzeigeschmelzleiter (2) verbunden ist.

7. Sicherungseinsatz nach einem der Ansprüche 1 bis 5,
**dadurch gekennzeichnet**,
daß das Formgedächtnis-Element (3) als Anzeigeschmelzleiter (2) ausgeführt ist und mit einer Sollschmelzstelle versehen ist.

8. Sicherungseinsatz nach einem der Ansprüche 1 bis 7,
**dadurch gekennzeichnet**,
daß der Anzeiger (4) mittig am Körper des Sicherungseinsatzes ausgeführt ist.
